# EUROPEAN PATENT APPLICATION

(11) **EP 2 330 083 A1**
(43) Date of publication of application: **08.06.2011**
(21) Application number: 09809360.2
(22) Date of filing: 26.08.2009
(51) Int. Cl.: C02F 1/52, C02F 103/42

(54) **FLOCCULATING ALGICIDE COMPOSITION**

(30) Priority: 26.08.2008 ES 200802488
(71) Applicant: Distribuidora Pool Magic 2004, S.L, 36203 Vigo, Pontevedra (ES)
(72) Inventor: De Villiers, Rocco, E-36203 Vigo Pontevedra (ES)
(74) Representative: Garcia-Cabrerizo y del Santo, Pedro Maria
(86) International application number: PCT/ES2009/000431
(87) International publication number: WO 2010/023336

(57) **Abstract**

Flocculating algicide composition constituted by the following elements in the proportions described: aluminium sulphate 21 %, copper sulphate 28.5%, sodium bisulphate 9.3%, ethylenediaminetetraacetic acid 12.5%, diatomaceous earth 28.7%.

## Description

### OBJECT OF THE INVENTION

The invention, such as the title of the present specification states, relates to a flocculating algicide composition.

More particularly, the object of the invention is focused on a flocculating algicide composition especially applied for treating pool water in order to prevent, by regularly pouring from time to time, the appearance of algae therein.

### BACKGROUND OF THE INVENTION

Currently, and as a reference to the state of the art, it should be noted that although a large number of algicide compositions intended for the same purpose are known, the existence of any other composition showing similar characteristics to those showed by that proposed herein is unknown on the part of the applicant.

### EXPLANATION OF THE INVENTION

Namely the proposed flocculating algicide composition is constituted by the following elements in the proportions described:
- Aluminium sulphate ... 21%
- Copper sulphate...28,5%
- Sodium bisulphate...9.3%
- Ethylenediaminetetraacetic acid...12.5%
- Diatomaceous earth...28.7%

Regarding said compounds should be noted that each plays a specific role in order to achieve optimal results of the algicide.

Thus, aluminum sulfate powder flocculates the powdered particles existing in the water so as to achieve water to be completely clear.

Copper sulfate controls the appearance of fungi and algae in pool water.

Sodium bisulfate helps controlling the pH level of pool water, so as to remain neutral.

Ethylenediaminetetraacetic acid prevents the copper sulfate from staining the pool

Finally, the diatomaceous earth is used for achieving a better filtration of the earth filters typical of the pool.

The composition being proposed by the present invention has the advantage of not being an oxidizing agent, such as happens with chlorine, which results in a better filtration of diatomaceous earth by being deposited on the earth of the pool filter.

It has to be noted that it has been proved that the result is improved in a wide range of standard type filters.

The described flocculating algicide composition thus represents an innovative structure with structural and constituent characteristics so far unknown for this purpose, which reasons linked to its practical usefulness; provide it sufficient grounds for obtaining the requested exclusivity privilege.

## Claims

1. FLOCCULATING ALGICIDE COMPOSITION, **characterized by** the fact of being constituted by the following elements in the proportions described:
- Aluminium sulphate ... 21%
- Copper sulphate ... 28,5%
- Sodium bisulphate ... 9.3%
- Ethylenediaminetetraacetic acid... 12.5%
- Diatomaceous earth...28.7%
